# EUROPEAN PATENT SPECIFICATION

(11) **EP 1 587 373 B1**
(45) Date of publication and mention of the grant of the patent: **10.09.2008**
(21) Application number: 04705300.4
(22) Date of filing: 26.01.2004
(51) Int. Cl.: A23G 3/42, A23G 3/34, A23G 4/10

(54) **SUGARLESS SYRUPS AND THEIR USE IN CHEWING GUM AND OTHER CONFECTIONS**
ZUCKERFREIER SIRUP UND VERWENDUNG DAVON IN KAUGUMMI UND KONFEKTPRODUKTEN
SIROPS SANS SUCRE ET LEUR UTILISATION DANS LE CHEWING GUM ET AUTRES CONFISERIES

(30) Priority: 27.01.2003 US 443037 P
(43) Date of publication of application: 26.10.2005
(73) Proprietor: WM. WRIGLEY JR. COMPANY, Chicago, IL 60611 (US)
(72) Inventor: MAZUREK, Pamela, Orland Park, Illinois 60462 (US); REED, Michael, Merrillville, Indiana 46410 (US); DWYER, Meghan, Chicago, Illinois 60629 (US); KOZIEL, Thomas, Chicago, Illinois 60612 (US)
(74) Representative: Hayes, Adrian Chetwynd
(86) International application number: PCT/US2004/002124
(87) International publication number: WO 2004/066746

(56) References cited:
- WO-A-95/08924
- US-A- 4 250 196
- US-A- 4 466 983
- US-A- 4 728 515
- US-A- 5 651 936

## Description

The present invention relates generally to chewing gums More specifically, the present invention relates to chewing gums including sorbitol.

It is known to include alditols, such as sorbitol, mannitol, and xylitol, in chewing gums and other confectionaries. Alditols can be used in chewing gum, as well as other confectioneries and food products, as a "sugar substitute". These sugar substitutes have the advantage that they are not fermented in the mouth of the consumer to form products that can attack dental enamel. Therefore, sorbitol, as well as other alditols, are generally used in sugarless products. Additionally, sorbitol can be used as a bulking agent.

A number of patents have disclosed and discussed the use of various compositions including sorbitol. U.S. Patent No. 3,857,965 discloses a chewing gum composition made from melting crystalline sorbitol and mixing the melted sorbitol with gum base and a crystallization retardant. U.S. Patent No. 4,156,740 to Glass et al., U.S. Patent No. 4,250,196 to Friello, U.S. Patent No. 4,252,829 to Terrevazzi and U.S. Patent No. 4,466,983 to Cifrese et al. disclose liquid compositions containing sorbitol used as a centerfill for chewing gum. U.S. Patent No. 5,120,551 to Yatka et al. discloses a syrup containing sorbitol and other alditols used in chewing gum compositions.

WO-A-95/08924 discloses a method of making chewing gum comprising the steps of: a) co-evaporating an aqueous solution comprising maltitol and a plasticizing agent to form a syrup; and b) mixing the syrup with gum base, bulking agents and flavouring agents to produce a gum composition.

US-A-5,651,936 describes a chewing gum including sorbitol and a method of making the same. The chewing gum is created from a formulation that includes a composition that comprises a syrup solution of aqueous sorbitol, a plasticizing agent selected from glycerin, propylene glycol and mixtures thereof, and an anti-cyrstallisation agent comprising alditols other than sorbitol having a degree of polymerization (DP) of 1 or 2.

US-A-4,728,515 discloses low moisture chewing gum compositions and methods of preparation using carbohydrate syrup-plasticizer compositions. The syrup comprises carbohydrate solids and water, with less than 30% of the solids having a degree of polymerization (DP) of 1 and more than 20% solids with a DP of 4 or greater. The ratio of carbohydrate solids to plasticizing agent in the composition is between 0.5:1 1 and 100:1 and the total water content of composition is less than 20%.

US-A-4,466,983 discloses a center-filled confectionary or chewing gum composition having an outer shell enclosing a cavity, and a sugarless, substantially nonaqueous semi-liquid center-fill within said cavity, said liquid center-fill comprising: a) 30 to 50% hydrogenated starch hydrolysate; b) 30 to 50% sorbitol solution; c) 20 to 50% glycerin; and d) optionally a flavour in a sufficient amount to impart its taste, wherein the total water content of the center-fill is 5% of less, all percents being based on the weight of semi-liquid centre-fill.

US-A-4,250,196 discloses a center-filled chewing gum having improved softness retention, flexibility, and excellent shelf life comprising a chewing gum piece including an enclosed cavity therein, and a liquid fill in said cavity, said liquid fill including an aqueous solution consisting essentially of hydrogenated starch hydrolysate as a sweetener and humectant, said hydrogenated starch hydrolysate being present as a solid in the liquid fill in an amount of from 75 to 93% by weight of the liquid fill.

Several patents disclose a syrup for use in chewing gum which is made by mixing glycerin or propylene glycol with an aqueous hydrogenated starch hydrolysate (HSH) such as Lycasin brand HSH from Roquette, including U. S. Patent Nos. 4,671,961 ; 4,671, 967 and 4,728, 515 to Patel et al. It is believed that Lycasin brand HSH contains, on a dry basis, about 6% sorbitol, about 52% maltitol and about 42% of oligosaccharides having a degree of polymerization ("DP") of 3 or greater.

Sorbitol can be provided in chewing gum in its crystalline form. It is believed that crystalline sorbitol currently accounts for approximately 50% of typical sugarfree chewing gum formulations. Unfortunately, crystalline sorbitol is costly. Although it would be desirable to have a replacement for crystalline sorbitol, heretofore, such possible replacements were not as effective, created product stability problems, created processability issues, were even more expensive than crystalline sorbitol, and/or could not be used with certain formulations.

In this regard, aqueous sorbitol has been explored for use in chewing gum. Sorbitol in an aqueous solution is a less expensive alternative, on a dry basis, than crystalline sorbitol. Unfortunately, the use of aqueous sorbitol in chewing gum at levels above 15% can create problems with respect to product stability. Likewise, the use of aqueous sorbitol at levels above 15% can also create processability problems. This is due, it is believed, to the water content contained in the aqueous sorbitol.

Additionally, there are problems with respect to at least certain chewing gum formulations when using sorbitol in an aqueous solution. Because typical aqueous sorbitol solutions contain about 30% water, the water added with the sorbitol is detrimental to moisture sensitive ingredients when sorbitol solution is provided at high levels in chewing gum. A further difficulty with aqueous sorbitol is that it readily crystallizes and causes the gum to become brittle. While Lycasin brand HSH contains a small amount of sorbitol, it does not provide a significant amount of sorbitol such that HSH can be substituted for crystalline sorbitol.

U.S. Patent 5,651,936 discloses a unique syrup composition containing aqueous sorbitol, a plasticizer agent, and an anticrystalizing agent. This composition was designed to use aqueous sorbitol as a less expensive form of sorbitol, but overcoming the foregoing problems. While this syrup was successfully used in chewing gum compositions used to make stick forms of chewing gum products, its use in other forms, particularly coated pellet gum, at a level great enough to be economically advantageous, was not satisfactory. Of course, other chewing gum formulations without the syrup can be made and used to form pellets for coated chewing gum products. However, it would be advantageous if a syrup made with the low cost form of sorbitol could be developed that could be used in pellet gum compositions. More importantly, it would be highly advantageous if a single syrup could be made that used inexpensive aqueous sorbitol and that could be used both in stick gum as well as other forms of chewing gum, so that only one sugarless syrup would be needed to make all types of products. It would especially be beneficial if the syrup could be used at levels such that the cost benefit of the low cost of the syrup made its use worthwhile from a practical standpoint.

There is therefore a need for a sugarless syrup that allows sorbitol in a non-crystalline state to be added to a chewing gum formulation that can be made into pellet gum, as well as added to stick gum formulations or other confections.

### BRIEF SUMMARY

The preferred embodiment of the present invention provides a sugarless syrup that surprisingly can be used in both stick and pellet chewing gum compositions, providing lower cost and improved chewing gum compositions. The preferred syrup can be used at levels which are high enough that the cost savings justify its use. More specifically, the present invention provides a chewing gum composition that includes an aqueous syrup containing sorbitol, a plasticizing agent and hydrogenated starch hydrolyzate. Additionally, the present invention also provides other products such as food stuffs, beverages, medicaments, and confectioneries that include the inventive aqueous sugarless syrup. Pursuant to the present invention, the sugarless syrup can be used in pellet gum formulations that contain levels of liquid sorbitol solution that were heretofore not possible.

In one aspect, the invention is a method of making a chewing gum composition comprising the steps of:
a) making a syrup by evaporating water from a mixture comprising.
   i) an aqueous sorbitol solution containing at least 50% sorbitol;
   ii) a plasticizing agent selected from the group consisting of glycerin, propylene glycol and mixtures thereof; and
   iii) a hydrogenated starch hydrolyzate syrup,
   iv) wherein the final evaporated syrup composition comprises less than 10% moisture, 5% to 20% plasticizing agent, at least 50% sorbitol, 3% to 25% maltitol, and at least 1.5% hydrogenated oligosaccharides having a DP of 3 or greater; and
b) mixing the syrup with gum base and additional chewing gum ingredients to produce the chewing gum composition.

In a second aspect, the invention is a chewing gum composition comprising a homogeneous mixture of gum base and a bulking agent wherein the bulking agent comprises an aqueous sugarless syrup comprising at least 50% sorbitol, 3% to 25% maltitol, 8% to 20% plasticizing agent and at least 1.5% hydrogenated oligosaccharides having a DP of 3 or greater and wherein the chewing gum composition has less than 2% moisture and said syrup comprises over 30% of said composition.

An advantage of an embodiment of the present invention is that it provides an improved pellet chewing gum formulation for making coated chewing gum products. Using this embodiment of the invention, sorbitol can be used in the pellet chewing gum composition in a state other than a crystalline state. This provides a more cost effective method of adding sorbitol to a pellet chewing gum composition.

Another advantage of the preferred embodiment of the invention is that the same sugarless syrup can be used to make pellet gum compositions that are sturdy enough to be coated in normal panning operations, and stick gum compositions that have cohesiveness and flexibility.

Additional features and advantages of the present invention are described in, and will be apparent from, the detailed description of the presently preferred embodiments.

### DETAILED DESCRIPTION OF THE PRESENTLY PREFERRED EMBODIMENTS

All percentages herein are weight percentages unless otherwise specified. As used herein, the term "chewing gum" also includes bubble gum and the like.

The present invention provides improved chewing gum formulations and methods of making chewing gum. Pursuant to the present invention, sorbitol is provided in a non-crystalline state at levels in pellet gum formulations that the inventors believe were not heretofore commercially possible utilizing liquid sorbitol.

Sorbitol can be added either alone, with other sugarless sweeteners, for example, in sugarfree chewing gum, or in combination with sugar sweeteners. Additionally, the sorbitol can be provided in the chewing gum entirely in the syrup form of the present invention, or along with a crystalline form of sorbitol.

Pursuant to the present invention, the sorbitol is added to other components of a chewing gum formulation as a coevaporated blend of aqueous sorbitol, a plasticizing agent, and hydrogenated starch hydrolyzate syrup. The blend of aqueous sorbitol is provided as a sugarless syrup. This blend can be used to reduce the usage of crystalline sorbitol in pellet chewing gum formulations. It has been found that the resultant product, including the sugarless syrup of the present invention, exhibits increased binding capacity over currently used binders in sugar-free gum.

The preferred syrup of the present invention comprises, on a dry basis, a 50% to 70% sorbitol, 8% to 15% plasticizing agent and 5% to 25% hydrogenated starch hydrolyzate solids. For some purposes, the syrup will comprise 60% to 80%, sorbitol, 8% to 15% plasticizing agent and 5% to 25% hydrogenated starch hydrolyzate solids containing maltitol and at least 1.5% (by weight of the syrup) hydrogenated oligosaccharides having a DP of 3 or higher. A presently preferred syrup contains about 70% sorbitol, about 13% plasticizing agent and about 15% hydrogenated starch hydrolyzate solids.

Sorbitol for use in the inventive syrup will preferably be provided initially in the form of an aqueous solution. The aqueous sorbitol solution will preferably contain at least 50% sorbitol, more preferably about 60% sorbitol, and most preferably about 70% sorbitol. Preferably the remainder of the solution is water. A commonly available sorbitol solution is Neosorb 70/02 from Roquette Corporation, which contains 70% sorbitol and about 30% water. It is believed that there are small amounts (0.75% to 1.5%) of mannitol in this typical sorbitol solution by way of an impurity. This amount of mannitol normally present is insufficient to prevent crystallization when the sorbitol solution is evaporated with the plasticizing agent to low moisture levels.

The plasticizing agent of the syrup of the present invention is selected from the group consisting of glycerin, propylene glycol and mixtures thereof. While the plasticizing agent may help prevent crystallization, its main function is to keep the syrup, with high solids level, fluid at room temperature. The ratio of alditols to plasticizing agent in the syrup will preferably be between 20:1 and 4:1, more preferably between 10:1 and 5:1, and most preferably between 7:1 and 6:1.

The hydrogenated starch hydrolyzate syrup provides two benefits. First, it prevents the sorbitol from crystallizing as high solids levels are reached while evaporating water from the syrup. Second, the preferred hydrogenated starch hydrolyzate syrup will provide flexibility to the stick gum formulations and robustness and cohesiveness to the pellet gum formulations. In this regard the preferred syrup should have a weight average degree of polymerization (DP) of at least 2.6, with at least 10% of the alditols in the syrup having a DP of 3 or greater. Preferably the alditols with a DP of 3 or greater will, as a group, have a weight average degree of polymerisation of between 4 and 5.
Preferably, a hydrogenated starch hydrolyzate syrup with a high maltitol content should be used, preferably 52% to 89% maltitol, with 1% to 6% sorbitol, and 10% to 42% hydrogenated oligosaccharides having a DP of 3 or greater. The preferred hydrogenated starch hydrolyzate syrup will have less than 30% water, more preferably 20% to 25% water. A particularly preferred syrup is C★ Maltidex M 16311 from Cerestar, which has a solids content of about 74.5%, and contains about 56.6% malitol (about 76% on a dry basis), about 1.5% sorbitol (about 2% on a dry basis) and about 16.4% hydrogenated oligosaccharides having a DP of 3 or greater (about 22% on a dry basis). It is believed that the weight average degree of polymerization of the oligosaccharides having a DP of 3 or greater is between 4 and 5.

The ratio of sorbitol to hydrogenated starch hydrolyzate solids in the sugarless syrup of the present invention will preferably be between 15:1 and 2:1, more preferably between 10:1 and 3:1, most preferably between 5:1 and 4:1. Preferably over 50% of the combined alditols in the syrup will have a DP of 1, and most preferably the sorbitol comprises over 60% of the alditols.

Generally, to make the aqueous sugarless syrup of the present invention, aqueous sorbitol, a plasticizing agent and hydrogenated starch hydrolyzate syrup are mixed together and then coevaporated under vacuum to create a syrup. Preferably, the aqueous sorbitol, plasticizer agent and hydrogenated starch hydrolyzate syrup combination is evaporated so that it contains not more than 10% water. More preferably, the aqueous sorbitol, plasticizing agent and anticrystallization agent mixture is evaporated so that it contains no more than 7% water, even more preferably no more than 5% water, and most preferably 2% to 4% water. Particularly preferred embodiments are evaporated to contain about 3% water.

A stick gum can be made using the syrup described in Examples 1-9. in U.S. Patent No. 5,651,936. This gum is easily made into a flat stick gum product that is sufficiently tough, but flexible for gum wrapping equipment. The sensory qualities of the product were a sweet, clean flavor and sweetener, and gave a consumer acceptable shelf life.

Gum made using the same syrup in pellet form is not satisfactory. Pellet gum centers require sufficient toughness and robustness so that pellet centers can be coated in panning equipment. A pellet gum made with only 20% of the syrup described in Examples 1-9 of U.S. Patent No. 5,651,936 was marginally acceptable, but this level of use still required the use of significant amounts of crystalline sorbitol, and was not cost effective. From other experience, it was predicted that a pellet gum made with sufficiently high levels of the prior syrup would be too soft for coating and become damaged during processing. Also, the high level of glycerin in the center would make it difficult to dry the various polyol coatings used in the coating processes. In addition, the high glycerin content would cause a loss in shelf life of coated pellet gums due to glycerine migration and absorption of moisture, causing the gum pellets to lose their crunch and have poor shelf life.

On the other hand, the preferred sugarless syrup of the present invention can be used in both stick gum and pellet gum, yet both products have the overall quality needed for manufacturing and consumer acceptance.

This improved syrup uses less glycerin and contains hydrogenated starch hydrolyzate solids, and can give a tougher, more cohesive gum center for pellet coating, while at the same time give an acceptable quality stick gum, and can even be used in a stick gum formula at a higher level than in the products using the syrup of Example 1-9 of U.S. Patent No. 5,651,936. This higher level of the sugarless syrup can reduce the overall cost of the stick gum formula, while keeping its good product texture and improved shelf life.

The new sugarless syrup surprisingly can be used in stick, tab, chunk or pellet chewing gum products, especially pellets that are to be coated. It is a great advantage to chewing gum manufacturers to use the same ingredients in all of their chewing gum compositions, which are then used to make stick products, tab products, pellets for coating, or gum balls.

The aqueous sorbitol, plasticizing agent and hydrogenated starch hydrolyzate can be provided in different combinations and ratios. Preferably, the syrup will be made from a mixture of 52% to 87% aqueous sorbitol solution, 8% to 20% plasticizing agent and 5% to 30% hydrogenated starch hydrolyzate. More preferably, the syrup will be made from a mixture of 60% to 75% sorbitol solution, 8% to 15% plasticizing agent and 8% to 20% hydrogenated starch hydrolyzate syrup.

The aqueous sorbitol syrup of the present invention will most frequently be the only syrup needed in the chewing gum formulation, whether the gum is in stick, tab, or pellet form. However, in some formulations, other aqueous syrups or solutions may be desired.

Pursuant to the present invention, the aqueous sorbitol syrup can be used to create sugarless chewing gums, because sugarless chewing gum typically contains sorbitol. However, it should be noted that the present invention can be used to create any chewing gum that includes sorbitol. Likewise, the inventive sugarless syrup can be used in other products that use sorbitol. Such products include confectioneries, medicaments, beverages and food products.

Chewing gum generally consists of a water insoluble gum base, a water soluble portion, and flavors. The water soluble portion dissipates with a portion of the flavor over a period of time during chewing. The gum base portion is retained in the mouth throughout the chew.

The insoluble gum base generally comprises elastomers, resins, fats and oils, softeners, and inorganic fillers. The gum base may or may not includes wax. The insoluble gum base can constitute 5 to 95 percent, by weight, of the chewing gum. More commonly, the gum base comprises 10 to

50 percent of the gum, and, in some preferred embodiments, 20 to 35 percent, by weight, of the chewing gum.

In an embodiment, the chewing gum base of the present invention contains. 20 to 60 weight percent synthetic elastomer, 0 to 30 weight percent natural elastomer, 5 to 55 weight percent elastomer plasticizer, 4 to 35 weight percent filler, 5 to 35 weight percent softener, and optional minor amounts (about one percent or less) of miscellaneous ingredients such as colorants, antioxidants, etc.

Synthetic elastomers may include, but are not limited to, polyisobutylene with a GPC weight average molecular weight of 10,000 to 95,000, isobutylene-isoprene copolymer (butyl elastomer), styrene-butadiene copolymers having styrene-butadiene ratios of 1:3 to 3:1, polyvinyl acetate having a GPC weight average molecular weight of 2,000 to 90,000, polyisoprene, polyethylene, vinyl acetate-vinyl laurate copolymer having vinyl laurate content of 5 to 50 percent by weight of the copolymer, and combinations thereof.

Preferred ranges are, for polyisobutylene, 50,000 to 80,000 GPC weight average molecular weight; for styrene-butadiene; 1:1 to 1:3 bound styrene-butadiene; for polyvinyl acetate, 10,000 to 65,000 GPC weight average molecular weight, with the higher molecular weight polyvinyl acetates typically used in bubble gum base; and for vinyl acetate-vinyl laurate, vinyl laurate content of 10-45 percent

Natural elastomers may include natural rubber such as smoked or liquid latex and guayule as well as natural gums such as jelutong, lechi caspi, perillo, sorva, massaranduba balata, massaranduba chocolate, nispero, rosindinha, chicle, gutta hang kang, and combinations thereof. The preferred synthetic elastomer and natural elastomer concentrations vary depending on whether the chewing gum in which the base is used is adhesive or conventional, bubble gum or regular gum, as discussed below. Preferred natural elastomers include jelutong, chicle, sorva and massaranduba balata.

Elastomer plasticizers may include, but are not limited to, natural rosin esters such as glycerol esters of partially hydrogenated rosin, glycerol esters of polymerized rosin, glycerol esters of partially dimerized rosin, glycerol esters of rosin, pentaerythritol esters of partially hydrogenated rosin, methyl and partially hydrogenated methyl esters of rosin, pentaerythritol esters of rosin; synthetics such as terpene resins derived from alpha-pinene, beta-pinene, and/or d-limonene; and any suitable combinations of the foregoing. The preferred elastomer plasticizers will also vary depending on the specific application and on the type of elastomer which is used.

Fillers/texturizers may include magnesium and calcium carbonate, ground limestone, silicate types such as magnesium and aluminum silicate, clay, alumina, talc, titanium oxide, mono-, di- and tri-calcium phosphate, cellulose polymers, such as wood, and combinations thereof.

Softeners/emulsifiers may include tallow, hydrogenated tallow, hydrogenated and partially hydrogenated vegetable oils, cocoa butter, glycerol monostearate, glycerol triacetate, lecithin, mono-, di- and triglycerides, acetylated monoglycerides, fatty acids (e.g. stearic, palmitic, oleic and linoleic acids), and' combinations thereof.

Colorants and whiteners may include FD&C-type dyes and lakes, fruit and vegetable extracts, titanium dioxide, and combinations thereof.

The base may or may not include wax. An example of a wax-free gum base is disclosed in U.S. Patent No. 5,286,500.

In addition to a water insoluble gum base portion, a typical chewing gum composition includes a water soluble bulk portion and one or more flavoring agents. The syrup of the present invention, containing water soluble ingredients, forms part of the water soluble bulk portion. The water soluble portion can also include powdered bulking agents (most typically bulk sweeteners), high-intensity sweeteners, flavoring agents, softeners, emulsifiers, colors, acidulants, fillers, antioxidants, and other components that provide desired attributes.

Softeners are added to the chewing gum in order to optimize the chewability and mouth feel of the gum. The softeners, which are also known as plasticizers and plasticizing agents, generally constitute between 0.5 to 15% by weight of the chewing gum. The softeners may include glycerin, lecithin, and combinations thereof. Aqueous sweetener solutions such as those containing sorbitol, hydrogenated starch hydrolyzate, corn syrup and combinations thereof, may also be used as softeners and binding agents in chewing gum. Thus, the sugarless syrup of the present invention can be used as a softener and binding agent.

Bulk sweeteners include both sugar and sugarless components. Bulk sweeteners and other bulking agents typically constitute 5 to 95% by weight of the chewing gum, more typically, 20 to 80% by weight, and more commonly, 30 to 60% by weight of the gum.

Sugar sweeteners generally include saccharide-containing components commonly known in the chewing gum art, including, but not limited to, sucrose, dextrose, maltose, dextrin; dried invert sugar, fructose, levulose, galactose, corn syrup solids, and the like, alone or in combination.

Generally, the sugarless syrup of the present invention comprises 20% to 65% of the chewing gum formulation. Typically the syrup will comprise 40% to 65% of stick chewing gum compositions, and 30% to 55% of pellet chewing gum compositions. Preferably the syrup will comprise at least 40% of the gum, more preferably more than 45% of the gum, and most preferably more than 50% of the gum composition when used to make stick gum. For pellet chewing gum compositions, the preferred syrup level is at least 30%, more preferably at least 35% and most preferably more than 49% of the gum composition.

As noted above, in addition to the sugarless syrup of the present invention, crystalline sorbitol, if desired, can also be used. Additionally, sugarless sweeteners can include, but are not limited to, other sugar alcohols such as mannitol, xylitol hydrogenated starch hydrolyzate, maltitol, and the like, alone or in combination.

High-intensity artificial sweeteners can also be used in combination with the above. Preferred sweeteners include, but are not limited to sucralose, aspartame, salts of acesulfame, alitame, saccharin and its salts, cyclamic acid and its salts, glycyrrhizin, dihydrochalcones, thaumatin, monellin, and the like, alone or in combination. In order to provide longer lasting sweetness and flavor perception, it may be desirable to encapsulate or otherwise control the release of at least a portion of the artificial sweetener. Such techniques as wet granulation, wax granulation, spray drying, spray chilling, fluid bed coating, coacervation, and fiber extension may be used to achieve the desired release characteristics.

Usage level of the artificial sweetener will vary greatly and will depend on such factors as potency of the sweetener, rate of release, desired sweetness of the product, level and type of flavor used and cost considerations. Thus, the active level of artificial sweetener may vary from 0.02 to 8%. When carriers used for encapsulation are included, the usage level of the encapsulated sweetener will be proportionately higher.

Combinations of sugar and/or sugarless sweeteners may be used in chewing gum. Additionally, the softener may also provide additional sweetness such as with aqueous sugar or alditol solutions.

If a low calorie gum is desired, a low caloric bulking agent can be used. Example of low caloric bulking agents include: polydextrose, Raftilose, Raftilin, fructooligosaccharides (NutraFlora), palatinose oligosaccharide, guar gum hydrolysate (Sun Fiber), and indigestible dextrin (Fibersol). However, other low calorie bulking agents can be used.

A variety of flavoring agents can be used. The flavor can be used in amounts of 0.1 to 15 weight percent of the gum, and preferably, 0.2 to 5%. Flavoring agents may include essential oils, synthetic flavors or mixtures thereof including, but not limited to, oils derived from plants and fruits such as citrus oils, fruit essences, peppermint oil, spearmint oil, other mint oils, clove oil, oil of wintergreen, anise and the like. Artificial flavoring agents and components may also be used. Natural and artificial flavoring agents may be combined in any sensorially acceptable fashion.

The present invention, it is believed, can be used with a variety of processes for manufacturing chewing gum.

Chewing gum is generally manufactured by sequentially adding the various chewing gum ingredients to commercially available mixers known in the art. After the ingredients have been thoroughly mixed, the chewing gum mass is discharged from the mixer and shaped into the desired form, such as by rolling into sheets and cutting into sticks, extruding into chunks, or casting into pellets.

Generally, the ingredients are mixed by first melting the gum base and adding it to the running mixer. The gum base may alternatively be melted in the mixer. Color and emulsifiers can be added at this time.

The sugarless syrup of the present invention can be added next along with any other syrup softeners or bulking agents. Any bulk powdered sweeteners may be added in next, or divided and part added in at different times. Flavoring agents are typically added with the final part of any bulk sweetener. The entire mixing process typically takes from 5 to 15 minutes, although longer mixing times are sometimes required. Those skilled in the art will recognize that variations of this general mixing procedure, or other mixing procedures, can be followed.

The entire mixing procedure typically takes from five to fifteen minutes, but longer mixing times may sometimes be required. Those skilled in the art will recognize that many variations of the above described procedure may be followed.

In this invention, pellets of gum are prepared as conventional chewing gum but formed into pellets that are balls or pillow-shaped. The pellets can be then polyol coated or panned by conventional panning techniques to make a unique coated pellet gum. The weight of the coating may be about 20% to about 50% of the weight of the finished product, but may be as much as 75% of the total gum product.

Conventional panning procedures generally coat with sucrose, but recent advances in panning have allowed use of other carbohydrate materials to be used in place of sucrose. Some of these components include, but are not limited to, dextrose, maltose, palatinose, xylitol, lactitol, hydrogenated isomaltulose, erythritol, maltitol, and other new alditols or combinations thereof. These materials may be blended with panning modifiers including, but not limited to, gum arabic, maltodextrins, corn syrup, gelatin, cellulose type materials like carboxymethyl cellulose or hydroxymethyl cellulose, starch and modified starches, vegetables gums like alginates, locust bean gum, guar gum, and gum tragacanth, insoluble carbonates like calcium carbonate or magnesium carbonate and talc. Antitack agents may also be added as panning modifiers, which allow the use of a variety of carbohydrates and alditols to be used in the development of new panned or coated gum products. Flavors may also be added with the sugar or sugarless coating and with the active to yield unique product characteristics.

The coating may contain ingredients such as flavoring agents, as well as artificial sweeteners and dispersing agents, coloring agents, film formers and binding agents. Flavoring agents contemplated by the present invention include those commonly known in the art such as essential oils, synthetic flavors or mixtures thereof, including but not limited to oils derived from plants and fruits such as citrus oils, fruit essences, peppermint oil, spearmint oil, other mint oils, clove oil, oil of wintergreen, anise and the like. The flavoring agents may be used in an amount such that the coating will contain from 0.2% to 3% flavoring agent, and preferably from 0.7% to 2.0% flavoring agent.

Artificial sweeteners contemplated for use in the coating include but are not limited to synthetic substances, saccharin, thaumatin, alitame, saccharin salts, aspartame, N-substituted APM derivatives such as neotame, sucralose and acesulfame-K. The artificial sweetener may be added to the coating syrup in an amount such that the coating will contain from 0.01% to 0.5%, and preferably from 0.1% to 0.3% artificial sweetener.

Dispersing agents are often added to syrup coatings for the purpose of whitening and tack reduction. Dispersing agents contemplated by the present invention to be employed in the coating syrup include titanium dioxide, talc, or any other antistick compound. Titanium dioxide is a presently preferred dispersing agent of the present invention. The dispersing agent may be added to the coating syrup in amounts such that the coating will contain from 0.1 % to 1.0%, and preferably from 0.3% to 0.6% of the agent.

Coloring agents are preferably added directly to the syrup in the dye or lake form. Coloring agents contemplated by the present invention include food quality dyes. Film formers preferably added to the syrup include methyl cellulose, gelatins, hydroxypropyl cellulose, ethyl cellulose, hydroxyethyl cellulose, carboxymethyl cellulose and the like and combinations thereof. Binding agents may be added either as an initial coating on the chewing gum center or may be added directly into the syrup. Binding agents contemplated by the present invention include gum arabic, gum talha (another type of acacia), alginate, cellulosics, vegetable gums and the like.

The coating is initially present as a liquid syrup which contains from 30% to 80% or 85% of the coating ingredients previously described herein, and from 15% or 20% to 70% of a solvent such as water. In general, the coating process is carried out in a rotating pan. Gum center tablets to be coated are placed into the rotating pan to form a moving mass.

The material or syrup which will eventually form the coating is applied or distributed over the gum center tablets. Flavoring agents may be added before, during and after applying the syrup to the gum centers. Once the coating has dried to form a hard surface, additional syrup additions can be made to produce a plurality of coatings or multiple layers of hard coating.

In a hard coating panning procedure, syrup is added to the gum center tablets at a temperature range of from 37.8°C to 115.6°C (100°F to 240°F ) Mostly, the syrup temperature is from 54.4°C to 93.3°C (130°F to 200°F ) throughout the process in order to prevent the polyol or sugar in the syrup from crystallizing. The syrup may be mixed with, sprayed upon, poured over, or added to the gum center tablets in any way known to those skilled in the art.

In general, a plurality of layers is obtained by applying single coats, allowing the layers to dry, and then repeating the process. The amount of solids added by each coating step depends chiefly on the concentration of the coating syrup. Any number of coats may be applied to the gum center tablet. Generally, no more than 75-100 coats are applied to the gum center pellets. The present invention contemplates applying an amount of syrup sufficient to yield a coated comestible containing 10% to 75% coating.

Those skilled in the art will recognize that in order to obtain a plurality of coated layers, a plurality of premeasured aliquots of coating syrup may be applied to the gum center pellets. It is contemplated, however, that the volume of aliquots of syrup applied to the gum center pellets may vary throughout the coating procedure.

Once a coating of syrup is applied to the gum center pellets, the present invention contemplates drying the wet syrup in an inert medium. A preferred drying medium comprises air. Forced drying air contacts the wet syrup coating in a temperature range of from 21.1°C to 46.1°C (70°C to 115°F) Generally, the drying air is in the temperature range of from 26.7°C to 37.8°C (80° to 100°F). The invention also contemplates that the drying air possess a relative humidity of less than 15 percent. Preferably, the relative humidity of the drying air is less than 8 percent.

The drying air may be passed over and admixed with the syrup coated gum centers in any way commonly know in the art. Generally, the drying air is blown over and around or through the bed of the syrup coated gum centers at a flow rate, for large scale operations, of about 79.3 mcubic metres (2800 cubic feet ) per minute. If lower quantities of material are being processed, or if smaller equipment is used, lower flow rates would be used.

For many years, flavors have been added to a sugar coating of pellet gum to enhance the overall flavor of gum. These flavors include spearmint flavor, peppermint flavor, wintergreen flavor, and fruit flavors. These flavors are generally preblended with the coating syrup just prior to applying it to the core or added together to the core in one or more coating applications in a revolving pan containing the cores. Generally, the coating syrup is very hot, 54.4°C to 93.3°C (130 to 200°F), and the flavor may volatilize if preblended with the coating syrup too early.

The concentrated coating syrup is applied to the gum cores as a hot liquid, the sugar or polyol allowed to crystallize, and the coating then dried with warm, dry air. This is repeated in 30 to 100 applications to obtain a hard shell coated product having an increased weight gain of 40% to 75%. A flavor is applied with one, two, three or even four or more of these coating applications. Each time flavor is added, several non-flavored coatings are applied to cover the flavor before the next flavor coat is applied. This reduces volatilization of the flavor during the coating process.

For mint flavors such spearmint, peppermint and wintergreen, some of the flavor components are volatilized, but sufficient flavor remains to give a product having a strong, high impact flavor. Fruit flavors, that may contain esters, are more easily volatilized and may be flammable and/or explosive and therefore, generally these type of fruit flavors may be pretreated in order to be able to add them to a gum coating.

By way of example and not limitation, examples of winter green type stick chewing gum formulations constructed pursuant to the present invention are in Table I.

**TABLE I**

| | Comparative Ex. A | Ex. 1 | Comparative Ex. B | Ex. 2 |
|---|---|---|---|---|
| Sorbitol | 31.88 | 12.48 | 29.75 | 1.1.83 |
| Comparative Sorbitol Syrup * | 36.45 | -- | 39.00 | -- |
| Inventive Sugarless Syrup ** | -- | 50.0 | -- | 50.0 |
| Gum Base | 25.0 | 25.0 | 27.5 | 27.5 |
| Glycerin | -- | 6.0 | -- | 7.0 |
| Water | 0.15 | -- | 0.03 | -- |
| Flavor | 1.85 | 1.85 | 1.95 | 1.95 |
| Encapsulated Flavor | 2.55 | 2.55 | 0.3 | 0.3 |
| Sweetener | 0.03 | 0.03 | 0.09 | 0.09 |
| Encapsulated High-Intensity Sweetener | 2.0 | 2.0 | 1.2 | 1.2 |
| Salt Solution | -- | -- | 0.05 | -- |
| Color | 0.09 | 0.09 | 0.13 | 0.13 |
| | 100.0 | 100.0 | 100.0 | 100.0 |

| | | | | |
|---|---|---|---|---|
| * Created by coevaporation of 70% sorbitol solution, glycerin, and maltitol to give a syrup with 51.75% sorbitol, 39.5% glycerin, 2.75% water, 4% mannitol, and 2% maltitol. ** Created by coevaporation of 70% sorbitol solution, glycerin, and hydrogenated starch syrup to give a syrup with 3% water, 13.1% glycerin, 69% sorbitol, 0.5% mannitol, 11.2% maltitol, and 3.2% hydrogenated oligosaccharides having a DP of 3 or higher. | | | | |

The following examples were also made.

**TABLE II**

| | Comparative Ex. C | Ex. 3 | Ex. 4 |
|---|---|---|---|
| Comparative Sorbitol Syrup * | 37.9 | -- | -- |
| Inventive Sugarless Syrup** | -- | 55.415 | 37.0 |
| Sorbitol | 31.915 | 10.5 | 13.52 |
| Gum Base | 25.9 | 25.9 | 30.0 |
| Glycerin | -- | 4.00 | -- |
| Calcium Carbonate | -- | -- | 14.9 |
| Flavor (Peppermint) | 1.95 | 1.95 | 2.58 |
| High-Intensity Sweetener | 0.05 | 0.05 | 0.10 |
| Encapsulated High-Intensity Sweetener | 0.86 | 0.86 | 1.90 |
| Encapsulated Flavor | 0.175 | 0.175 | -- |
| Lecithin | 0.10 | 0.10 | -- |
| Color | 1.0 | 1.0 | -- |
| Water | 0.10 | -- | -- |
| Salt Solution | 0.05 | 0.05 | -- |
| | 100.0 | 100.0 | 100.0 |

| | | | |
|---|---|---|---|
| * Created by coevaporation of 70% sorbitol solution, glycerin, and maltitol to give a syrup with 51.75% sorbitol, 39.5% glycerin, 2.75% water, 4% mannitol, and 2% maltitol. ** Created by coevaporation of 70% sorbitol solution, glycerin, and hydrogenated starch syrup to give a syrup with 3% water, 13.1% glycerin, 69% sorbitol, 0.5% mannitol, 11.2% maltitol, and 3.2% hydrogenated oligosaccharides having a DP of 3 or higher. | | | |

In Example 3, the lower level of glycerin in the inventive sugarless syrup compared to the comparative sorbitol syrup was compensated for by adding a higher level of the inventive sugarless syrup, and by adding additional glycerin to the formula. This gum was soft and flexible, and exhibited many of the same qualities as the comparative Example C chewing gum. With the higher level of syrup usage and with the lower usage of crystalline sorbitol, the overall cost of Example 3 may be less than that of comparative Example C. In addition, with the inventive syrup containing some higher hydrogenated oligosaccharides, the chewing gum of Example 3 appears to be more flexible than its comparative example.

In Example 4, used to make pellet gum, the lower level of glycerin and the use of a quantity of higher hydrogenated oligosaccharides allow the gum center formulation to be tough and robust for coating. It is anticipated that the lower glycerin level in the pellet gum formulation would also improve the shelf life of the coating. If a pellet gum example had been made with the comparative syrup, it is expected that the gum would have been too soft for coating and become easily damaged during the process.

The inventive sugarless syrup, besides being very effective for use in sugarless stick gum, can also be used in a variety of pellet gum formulations as in Table III.

**TABLE III**

| | Comp. Ex. D | Ex. 5 | Comp. Ex. E | Ex. 6 | Comp. Ex. F | Ex. 7 |
|---|---|---|---|---|---|---|
| Sorbitol | 45.05 | 10.0 | 44.635 | 9.495 | 45.24 | 10.10 |
| Inventive Sugarless Syrup** | -- | 40.0 | -- | 40.0 | -- | 40.0 |
| Gum Base | 30.0 | 30.0 | 30.0 | 30.0 | 30.0 | 30.0 |
| Calcium Carbonate | 14.75 | 14.75 | 14.90 | 14.90 | 14.90 | 14.90 |
| Glycerin | 4.0 | -- | 4.0 | -- | 4.0 | -- |
| Mint Flavor | 3.25 | 3.25 | -- | -- | -- | -- |
| Wintergreen Flavor | -- | -- | 3.605 | 3.605 | -- | -- |
| Spearmint Flavor | -- | -- | -- | -- | 3.0 | 3.0 |
| Water | 0.95 | -- | 0.86 | -- | 0.86 | -- |
| High-Intensity Sweetener | 0.10 | -- | 0.10 | -- | 0.10 | -- |
| Encapsulated High-Intensity Sweetener | 1.90 | 2.0 | 1.90 | 2.0 | 1.90 | 2.0 |
| | 100.0 | 100.0 | 100.0 | 100.0 | 100.0 | 100.0 |

| | | | | | | |
|---|---|---|---|---|---|---|
| ** Created by coevaporation of 70% sorbitol solution, glycerin, and hydrogenated starch syrup to give a syrup with 3% water, 13.1 % glycerin, 69% sorbitol, 0.5% mannitol, 11.2% maltitol, and 3.2% hydrogenated oligosaccharides having a DP of 3 or higher. | | | | | | |

Sensory and other tests showed the gum centers made with the inventive sugarless syrup were similar in texture to the corresponding comparative examples.

These center formulas can be coated with a variety of alditol sweeteners such as xylitol, isomalt, maltitol, lactitol, or sorbitol to yield coated sugarless products with good quality texture. The following table gives coating formulations with maltitol for the various centers of the examples in Table IV.

**TABLE IV**

| | Ex.8 | Ex. 9 | Hex. 10 |
|---|---|---|---|
| Ex. 5 centers | 65.44 | -- | -- |
| Ex. 6 centers | -- | 65.44 | -- |
| Ex. 7 centers | -- | -- | 65.44 |
| Maltitol (from syrup) | 26.36 | 27.16 | 27.15 |
| Maltitol Powder | 4.20 | 4.20 | 4.20 |
| Gum Arabic | 2.33 | 2.39 | 2.39 |
| Titanium Dioxide | 0.63 | 0.21 | 0.21 |
| Flavor | 0.68 | 0.36 | 0.34 |
| High-Intensity Sweetener | 0.31 | 0.14 | 0.17 |
| Wax & Talc (for polishing) | 0.05 | 0.10 | 0.10 |
| | 100.0 | 100.0 | 100.0 |

### EXAMPLES 11-16 (not part of the invention)

A sorbitol syrup containing a plasticizing agent and hydrogenated starch hydrolyzate and only 3% water (hereinafter "sugarless syrup") such as used in any of Examples 1-7, may be used in a sugarless, non-cariogenic hard candy as shown in the following formulas:

### Example 11

Fruit Flavored hard candy:

| | % |
|---|---|
| Xylitol | 15.8 |
| Sorbitol | 34.8 |
| Sugarless Syrup | 38.0 |
| Water | 11.0 |
| Citric Acid | 0.3 |
| Artificial Sweetener/ Fruit Flavor/Color | as needed |

### Example 12

Butterscotch Hard Candy:

| | % |
|---|---|
| Sugarless Syrup | 53.6 |
| Sorbitol | 26.4 |
| Water | 17.66 |
| Butter | 2.06 |
| Salt | 0.12 |
| Natural and Artificial Flavor | 0.16 |

### Examples 13

Hard Candy:

| | % |
|---|---|
| Sorbitol | 30.0 |
| Sugarless Syrup | 60.0 |
| Xylitol | 9.35 |
| Aspartame | 0.35 |
| Salt | 0.12 |
| Citric Acid/Flavor/Color | as needed |

Procedure: Hard candies can be made by the following procedure:
1. In a stainless steel, steam jacketed kettle, the syrup, xylitol, water, sorbitol, and salt are added and the mixture is heated to form a thick syrup.
2. The syrup is cooked and mixed until a temperature of about 148.9°C (300°F) and a moisture level of 1-2% is obtained.
3. The heavy syrup is poured onto a stainless steel cooling table:
4. Citric acid, artificial ingredients, flavors and color, and butter are added and mixed by kneading.
5. The resultant product is allowed to cool to room temperature and cut as needed.

### Example 14 (sugarless taffy)

Sugarless syrup may be used to prepare a sugar-free taffy by the following formula and procedure:

| | % As Is | % DSB | 20# (9.072 Kg) Batch |
|---|---|---|---|
| Syrup | 94.5 | 92.7 | 18.9 (8.573 Kg) |
| 110°F, M.P. Vegetable Oil | 5.25 | 7.0 | 1.0 (0.476 Kg) |
| Lecithin | 0.25 | 0.3 | 0.3 (0.136 Kg) |
| Flavor/Color/Acid/Sweetener | As needed | | |

Procedure:
1. Weigh sugarless syrup into an atmospheric cooker, such as a Savage open fire cooker, and cook to about 123-9°C (255°F). No agitation is required for this step.
2. Allow the cooked sugarless syrup to cool to about 110°C (230°F) and add fat and lecithin; fat does not have to be premelted. Mix until uniform.
3. Pour mass on oiled cooling table. Side bars may be necessary for initial cooling if table is small.
4. Work in color, flavor and acid on the slab before pulling (color and flavor may also be added on puller). Cool to plastic texture.
5. Pull cooked mass until desired texture is attained. Cut and wrap in moisture resistant packaging.

### Example 15 (sugar-free caramel)

Sugarless syrup may be used to prepare a sugar-free caramel by the following formula and procedure:

| | |
|---|---|
| Sugarless Syrup | 58.53% |
| Evaporated milk | 33.24 |
| Coconut Oil, 33°C (92°F) | 7.68 |
| Lecithin | 0.20 |
| Salt | 0.20 |
| Aspartame | 0.11 |
| Vanillin | 0.04 |
| Total | 100.00% |

Procedure:
1. Prepare aspartame slurry by mixing 1/3 ratio of aspartame to coconuts oil in a high shear blender for about 30 seconds.
2. Premix all ingredients, except aspartame slurry, half of the evaporated milk and the vanillin, for 5 minutes at about 48-9°C (120°F).
3. Bring premix to a boil and slowly add the balance of the evaporated milk, maintaining the boil.
4. Cook to the desired texture. Final cook temperature will vary according to the cooking process. A suggested final cook temperature is about 118.3°C (245°F) .
5.Cool the caramel to about 104°C (220°F) and add the aspartame slurry slowly with mixing. The vanillin should also be added at this time.
6. Slab, cut and wrap as desired.

### Example 16 (sugarless gum drops)

| | % |
|---|---|
| Gelatin 200 bloom type B | 7.0 |
| Crystalline sorbitol | 34.9 |
| Sugarless Syrup | 32.6 |
| Hot Water (80-90°C) | 14.0 |
| Water | 10.0 |
| Citric Acid Solution | 1.5 |
| Fruit Flavor/Color | as needed |

Procedure:
1. Dissolve gelatin directly in hot water.
2. Cook the sugarless syrup, sorbitol and water at 115°C, and add gelatin solution.
3. Stir slowly in order to obtain a smooth homogenous mixture.
4. Remove air bubbles with deaeration equipment or other available means.
5. Add citric acid solution, flavor and color.
6. Deposit in cool and dry starch, and sprinkle a little starch onto the articles.
   Temperature: 70°C. Total solids when depositing: 78°C Brix.
7. Store the starch tray at room temperature for 24 hours.
8. After removal from the molding starch, oil the articles or coat with mannitol.

Other food items in which sugarless syrup may be used as a non-cariogenic bulking agent are:
1. Confections and frostings.
2. Dressings for salads.
3. Frozen dairy deserts and mixes.
4. Gelatins, puddings and fillings.
5. Hard candy.
6. Soft candy.
7. Baked goods and baking mixes.

It should be appreciated that the products and methods of the present invention are capable of being incorporated in the form of a variety of embodiments, only a few of which have been illustrated and described above. The invention may be embodied in other forms without departing from its spirit or essential characteristics. It will be appreciated that the addition of some other ingredients, process steps, materials or components not specifically included will have an adverse impact on the present invention. The best mode of the invention may therefore exclude ingredients, process steps, materials or components other than those listed above for inclusion or use in the invention.

## Claims

1. A method of making a chewing gum composition comprising the steps of:
a) making a syrup by evaporating water from a mixture comprising:
i) an aqueous sorbitol solution containing at least 50% sorbitol;
ii) a plasticizing agent selected from the group consisting of glycerin, propylene glycol and mixtures thereof; and
iii) a hydrogenated starch hydrolyzate syrup,
iv) wherein the final evaporated syrup composition comprises less than 10% moisture, 5% to 20% plasticizing agent, at least 50% sorbitol, 3% to 25% maltitol, and at least 1.5% hydrogenated oligosaccharides having a DP of 3 or greater; and
b) mixing the syrup with gum base and additional chewing gum ingredients to produce the chewing gum composition.

2. The method of claim 1 wherein the step of mixing the syrup with the gum base comprises:
a) providing 5% to 95% gum base;
b) providing 5% to 95% of a bulking agent, the bulking agent comprising the syrup;
c) providing 0.1 to 15% flavoring agent; and
d) mixing the gum base, bulking agent and flavoring agent to form the chewing gum composition.

3. The method of claim 1 wherein the syrup comprises over 30% of the chewing gum composition.

4. The method of claim 1 wherein the additional chewing gum ingredients comprise a flavoring agent and a powdered bulking agent.

5. The method of claim 1 wherein the chewing gum composition is sugarless.

6. The method of claim 1 wherein the mixture, prior to evaporation, comprises 52% to 87% sorbitol solution, 8% to 20% plasticizing agent and 5% to 30% hydrogenated starch hydroylzate syrup.

7. The method of claim 1 wherein the syrup, after evaporation, has a water content of less than 4%.

8. The method of claim 1 wherein the plasticizing agent is selected from the group consisting of glycerin, propylene glycol and mixtures thereof.

9. The method of claim 1 wherein the hydrogenated oligosaccharides having a DP of at least 3 or greater in the mixture have a weight average DP of between 4 and S.

10. The method of claim 1 wherein the evaporation is carried out under vacuum.

11. The method of claim 1 wherein the sorbitol solution comprises about 70% sorbitol and about 30% water.

12. The method of claim 1 wherein the syrup is evaporated to a moisture of not more than 10%.

13. The method of claim 1 wherein the syrup is evaporated to a moisture content of less than 5%.

14. The method of claim 1 wherein the syrup is evaporated to a moisture content of less than 3%.

15. The method of claim 1 wherein the additional chewing gum ingredients includes a crystalline form of sorbitol.

16. A chewing gum composition comprising a homogeneous mixture of gum base and a bulking agent wherein the bulking agent comprises an aqueous sugarless syrup comprising at least 50% sorbitol, 3% to 25% maltitol, 8% to 20% plasticizing agent and at least 1.5% hydrogenated oligosaccharides having a DP of 3 or greater and wherein the chewing gum composition has less than 2% moisture and said syrup comprises over 30% of said composition.

17. The chewing gum composition of claim 16 wherein said syrup comprises over 40% of the composition.

18. The chewing gum composition of claim 16 wherein sorbitol comprises over 60% of said syrup.

19. The chewing gum composition of claim 16 wherein the oligosaccharides having a DP of at least 3 or greater have a weight average DP of between 4 and 5.

20. The chewing gum composition of claim 16 wherein the chewing gum composition includes a crystalline form of sorbitol.

21. The chewing gum composition of claim 16 wherein the chewing gum composition is sugarfree.

22. The chewing gum composition of claim 16 wherein the water insoluble gum base is wax-free.

23. The chewing gum composition of claim 16 wherein the chewing gum composition includes artificial sweeteners.

24. The chewing gum composition of claim 16 wherein the chewing gum composition includes glycerin beside the plasticizing agent in the syrup.

## Patentansprüche

1. Verfahren zur Herstellung einer Kaugummizusammensetzung, umfassend die Schritte:
a) Herstellen eines Sirups, indem man Wasser aus einer Mischung verdampft, umfassend:
i) eine wässrige Sorbitlösung, die mindestens 50% Sorbit enthält;
ii) einen Weichmacher ausgewählt aus der Gruppe bestehend aus Glycerin, Propylenglykol und Gemischen davon und
iii) einen hydrierten Stärkehydrolysatsirup,
iv) wobei die endgültige verdampfte Sirupzusammensetzung einen Feuchtegehalt von weniger als 10%, 5% bis 20% Weichmacher, mindestens 50% Sorbit, 3% bis 25% Maltit und mindestens 1,5% hydrierte Oligosaccharide mit einem DP (Polymerisationsgrad) von 3 oder mehr enthält, und
b) Mischen des Sirups mit einer Kaugummi-Grundmasse und zusätzlichen Kaugummi-Bestandteilen, um die Kaugummizusammensetzung herzustellen.

2. Verfahren nach Anspruch 1, wobei der Schritt Mischen des Sirups mit der Kaugummi-Grundmasse umfasst:
a) Bereitstellen von 5% bis 95% Kaugummi-Grundmasse
b) Bereitstellen von 5% bis 95% eines Füllstoffs, wobei der Füllstoff den Sirup enthält
c) Bereitstellen von 0,1 bis 15% eines Aromastoffs und
d) Mischen der Kaugummi-Grundmasse, des Füllstoffs und des Aromastoffs, um die Kaugummizusammensetzung zu bilden.

3. Verfahren nach Anspruch 1, wobei der Sirup mehr als 30% der Kaugummizusammensetzung umfasst.

4. Verfahren nach Anspruch 1, wobei die zusätzlichen Kaugummi-Bestandteile einen Aromastoff und einen pulverisierten Füllstoff umfassen.

5. Verfahren nach Anspruch 1, wobei die Kaugummizusammensetzung zuckerfrei ist.

6. Verfahren nach Anspruch 1, wobei das Gemisch vor dem Verdampfen 52% bis 87% Sorbitlösung, 8% bis 20% Weichmacher und 5% bis 30% hydrierten Stärkehydrolysatsirup enthält.

7. Verfahren nach Anspruch 1, wobei der Sirup nach dem Verdampfen einen Wassergehalt von weniger als 4% hat.

8. Verfahren nach Anspruch 1, wobei der Weichmacher aus der Gruppe bestehend aus Glycerin, Propylenglykol und Gemischen davon ausgewählt ist.

9. Verfahren nach Anspruch 1, wobei die hydrierten Oligosaccharide mit einem DP von mindestens 3 oder mehr, in dem Gemisch einen gewichtsmittleren DP zwischen 4 und 5 haben.

10. Verfahren nach Anspruch 1, wobei das Verdampfen unter Vakuum durchgeführt wird.

11. Verfahren nach Anspruch 1, wobei die Sorbitlösung etwa 70% Sorbit und etwa 30% Wasser enthält.

12. Verfahren nach Anspruch 1, wobei der Sirup bis zu einem Feuchtegehalt von nicht mehr als 10% verdampft wird.

13. Verfahren nach Anspruch 1, wobei der Sirup bis zu einem Feuchtegehalt von weniger als 5% verdampft wird.

14. Verfahren nach Anspruch 1, wobei der Sirup bis zu einem Feuchtegehalt von weniger als 3% verdampft wird.

15. Verfahren nach Anspruch 1, wobei die zusätzlichen Kaugummi-Bestandteile eine kristalline Form von Sorbit umfassen.

16. Kaugummizusammensetzung umfassend eine homogene Mischung einer Kaugummi-Grundmasse und eines Füllstoffs, wobei der Füllstoff einen wässrigen zuckerfreien Sirup umfasst, umfassend mindestens 50% Sorbit, 3% bis 25% Maltit, 8% bis 20% Weichmacher und mindestens 1,5% hydrierte Oligosaccharide mit einem DP von 3 oder mehr und wobei die Kaugummizusammensetzung einen Feuchtegehalt von weniger als 2% hat und der Sirup mehr als 30% der Zusammensetzung umfasst.

17. Kaugummizusammensetzung nach Anspruch 16, wobei der Sirup mehr als 40% der Zusammensetzung umfasst.

18. Kaugummizusammensetzung nach Anspruch 16, wobei das Sorbit mehr als 60% des Sirups umfasst.

19. Kaugummizusammensetzung nach Anspruch 16, wobei die Oligosaccharide mit einem DP von mindestens 3 oder mehr, einen gewichtsmittleren DP zwischen 4 und 5 haben.

20. Kaugummizusammensetzung nach Anspruch 16, wobei die Kaugummizusammensetzung eine kristalline Form von Sorbit enthält.

21. Kaugummizusammensetzung nach Anspruch 16, wobei die Kaugummizusammensetzung zuckerfrei ist.

22. Kaugummizusammensetzung nach Anspruch 16, wobei die wasserunlösliche Kaugummi-Grundmasse frei von Wachs ist.

23. Kaugummizusammensetzung nach Anspruch 16, wobei die Kaugummizusammensetzung künstliche Süßungsmittel enthält.

24. Kaugummizusammensetzung nach Anspruch 16, wobei die Kaugummizusammensetzung neben dem Weichmacher im Sirup Glycerin enthält.

## Revendications

1. Procédé pour la préparation d'une composition de gomme à mâcher, comprenant les étapes consistant à :
a) préparer un sirop par évaporation de l'eau d'un mélange comprenant :
i) une solution aqueuse de sorbitol, contenant au moins 50 % de sorbitol
ii) un agent plastifiant choisi dans le groupe consistant en le glycérol, le propylèneglycol et leurs mélanges ; et
iii) un sirop d'hydrolysat d'amidon hydrogéné,
iv) ladite composition de sirop évaporée finale comprenant moins de 10 % d'humidité, 5 % à 20 % d' agent plastifiant, au moins 50 % de sorbitol, 3 % à 25 % de maltitol, et au moins 1,5 % d'oligosaccharides hydrogénés ayant un DP égal ou supérieur à 3 ; et
b) mélanger le sirop à une base de gomme et à des ingrédients supplémentaires de gomme à mâcher pour produire la composition de gomme à mâcher.

2. Procédé suivant la revendication 1, dans lequel l'étape de mélange du sirop à la base de gomme comprend les étapes consistant à :
a) fournir 5 % à 95 % d'une base de gomme ;
b) fournir 5 % à 95 % d'un agent d' accroissement de volume, l'agent d'accroissement de volume comprenant le sirop ;
c) fournir 0,1 à 15 % d'un agent aromatisant ; et
d) mélanger la base de gomme, l'agent d'accroissement de volume et l'agent aromatisant pour former la composition de gomme à mâcher.

3. Procédé suivant la revendication 1, dans lequel le sirop représente plus de 30 % de la composition de gomme à mâcher.

4. Procédé suivant la revendication 1, dans lequel les ingrédients supplémentaires de gomme à mâcher comprennent un agent aromatisant et un agent d'accroissement de volume en poudre.

5. Procédé suivant la revendication 1, dans lequel la composition de gomme à mâcher est une composition sans sucre.

6. Procédé suivant la revendication 1, dans lequel le mélange, avant évaporation, comprend 52 % à 87 % de solution de sorbitol, 8 % à 20 % d'agent plastifiant et 5 % à 30 % de sirop d'hydrolysat d'amidon hydrogéné.

7. Procédé suivant la revendication 1, dans lequel le sirop, après évaporation, a une teneur en eau inférieure à 4 %.

8. Procédé suivant la revendication 1, dans lequel l'agent plastifiant est choisi dans le groupe consistant en le glycérol, le propylèneglycol et leurs mélanges.

9. Procédé suivant la revendication 1, dans lequel les oligosaccharides hydrogénés ayant un DP au moins égal ou supérieur à 3 dans le mélange ont une moyenne de poids de DP de 4 à 5.

10. Procédé suivant la revendication 1, dans lequel l'évaporation est effectuée sous vide.

11. Procédé suivant la revendication 1, dans lequel la solution de sorbitol comprend environ 70 % de sorbitol et environ 30 % d'eau.

12. Procédé suivant la revendication 1, dans lequel le sirop est évaporé à une teneur en humidité non supérieure à 10 %.

13. Procédé suivant la revendication 1, dans lequel le sirop est évaporé à une teneur en humidité inférieure à 5 %.

14. Procédé suivant la revendication 1, dans lequel le sirop est évaporé à une teneur en humidité inférieure à 3 %.

15. Procédé suivant la revendication 1, dans lequel les ingrédients supplémentaires de gommes à mâcher comprennent une forme cristalline de sorbitol.

16. Composition de gomme à mâcher comprenant un mélange homogène d'une base de gomme et d'un agent d'accroissement de volume, dans laquelle l'agent d'accroissement de volume comprend un sirop aqueux sans sucre comprenant au moins 50 % de sorbitol, 3 % à 25 % de maltitol, 8 % à 20 % d'agent plastifiant et au moins 1,5 % d'oligosaccharides hydrogénés ayant un DP égal ou supérieur à 3, ladite composition de gomme à mâcher ayant une teneur en humidité inférieure à 2 % et ledit sirop représentant plus de 30 % de ladite composition.

17. Composition de gomme à mâcher suivant la revendication 16, dans laquelle ledit sirop représente plus de 40 % de la composition.

18. Composition de gomme à mâcher suivant la revendication 16, dans laquelle le sorbitol représente plus de 60 % dudit sirop.

19. Composition de gomme à mâcher suivant la revendication 16, dans laquelle les oligosaccharides ayant un DP au moins égal ou supérieur à 3 ont une moyenne en poids de DP de 4 à 5.

20. Composition de gomme à mâcher suivant la revendication 16, ladite composition de gomme à mâcher comprenant une forme cristalline de sorbitol.

21. Composition de gomme à mâcher suivant la revendication 16, ladite composition de gomme à mâcher étant une composition sans sucre.

22. Composition de gomme à mâcher suivant la revendication 16, dans laquelle la base de gomme insoluble dans l'eau est dépourvue de cire.

23. Composition de gomme à mâcher suivant la revendication 16, ladite composition de gomme à mâcher comprenant des édulcorants artificiels.

24. Composition de gomme à mâcher suivant la revendication 16, ladite composition de gomme à mâcher comprenant du glycérol en plus de l'agent plastifiant présent dans le sirop.
